# EUROPEAN PATENT SPECIFICATION

(11) **EP 1 798 971 B1**
(45) Date of publication and mention of the grant of the patent: **04.09.2013**
(21) Application number: 06125272.2
(22) Date of filing: 01.12.2006
(51) Int. Cl.: H04N 21/488, H04N 21/485, H04N 7/088

(54) **Video processing apparatus and control method thereof**
Videoverarbeitungsvorrichtung und Ansteuerungsverfahren dafür
Appareil de traitement d'images et son procédé de commande

(30) Priority: 13.12.2005 KR 20050122544
(43) Date of publication of application: 20.06.2007
(73) Proprietor: Samsung Electronics Co., Ltd., Suwon-si, Gyeonggi-do, 443-742 (KR)
(72) Inventor: Choe, Ju-hyun, Suwon-si Gyeonggi-do (KR)
(74) Representative: Clark, David James

(56) References cited:
- EP-A2- 0 578 300
- EP-A2- 0 692 909
- WO-A1-95/15647
- US-A1- 2003 237 100
- US-A1- 2005 078 217
- "Enhanced Teletext specification; ETSI EN 300 706", IEEE, LIS, SOPHIA ANTIPOLIS CEDEX, FRANCE, vol. BC, no. V1.2.1, 1 April 2003 (2003-04-01), XP014001791, ISSN: 0000-0001
- "Television systems; Data transmission within Teletext; Final draftETSI EN 300 708", IEEE, LIS, SOPHIA ANTIPOLIS CEDEX, FRANCE, vol. BC, no. V1.2.1, 1 December 2002 (2002-12-01), XP014001794, ISSN: 0000-0001

## Description

The present invention relates to a video processing apparatus an d control methods thereof, an d more particularly, to a video processing apparatus for receiving TTX information and reproducing captions, and a control method of the video processing apparatus.

In general, a video processing apparatus such as TV, capable of displaying teletext (TTX) information, receives a broadcast signal including the TTX information from a broadcasting station. After processing video information in the broadcast signal received from the broadcasting station, the video processing apparatus displays video corresponding to the broadcast signal. At the same time, the video processing apparatus continuously extracts and stores the TTX information from the received broadcast signal. That is, when the TTX information is contained in the received broadcast signal, th e video processing apparatus automatically stores the TTX information. The TTX information can represent information of diverse types. Recently, TTX information has been provided on a number of pages from 100 pages to 899 pages, the content of which differ according to the broadcast stations providing the TTX information. For instance, TTX information provided from American Broadcasting Co. (ABC) may differ from TTX information provided from Cable News Network (CNN) in information types on the respective pages.

To watch the captions provided through the TTX information at the video processing apparatus, a user selects a TTX mode change input. This input causes the video processing apparatus provided to enter a TTX mode, and can be using a user input part for enabling user to manipulate the video processing apparatus. The video processing apparatus displays a default page of the pre-stored TTX information. After changing to the TTX mode, the user manipulates the user input part to move to a pre-stored caption page corresponding to a current broadcast channel. Alternatively, when the user does not remember the caption page, the user needs to search for the caption page providing the caption information by manipulating the user input part while watching the default page of the displayed TTX information. Finally, when the caption page selected by the user is displayed, the video processing apparatus then allows the user to watch the captioning and the video.

As discussed above, to watch the captioning at the video processing apparatus in th e related art, disadvantageously, the user needs to manually change to the TTX mode and move to the caption page. In addition, when the user does not remember the caption page number with respect to the corresponding broadcast channel, the user has to search for the caption page through the several manipulations of the user input part.

Meanwhile, as transmitting the broadcast signal together with the TTX information, the broadcast station provides the caption page including the caption information if necessary, not all the time. In other words, the broadcast station provides the caption page loaded in the TTX information only when broadcasting a program that requires the caption information, such as movie or news. Hence, even when the video processing apparatus of the related art can service the captioning, the user may miss the captioning due to his/her unawareness of the captioning.

The video processing apparatus of the related art is in the TTX mode when the user is watching the captioning as mentioned earlier. Thus, the video processing apparatus is not able to carry out to other functions such as channel change, video play, and screen adjustment unless the user exits from the TTX mode through a separate manipulation. Accordingly, to change to other functions while watching the captioning, the user experiences inconvenience when exiting from the TTX mode through several manipulations of the user input part.

EP 0 692 909 describes a method to provide subtitles in a teletext system. All pages containing subtitle information in different languages are listed in a table, with a language number stored as a channel parameter memorising indirectly the appropriate page number for each channel.

EP 0 587 300 describes a television receiver including a teletext decoder. For each receivable television station page numbers of subtitling pages are fixed in a nonvolatile memory.

US 2003/0237100 describes a system for automatically displaying program guide information for television programs using information from an Extended Data Service (EDS).

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram of a video processing apparatus according to an embodiment of the present invention;
FIG. 2 is a partial flowchart outlining operations of the video processing apparatus according to an embodiment of the present invention;
FIG. 3 is a diagram showing an exemplary user interface (UI) for inputting page information in the video processing apparatus according to an embodiment of the present invention; and
FIG. 4 is a diagram showing an exemplary video and caption image in the video processing apparatus according to an embodiment of the present invention.

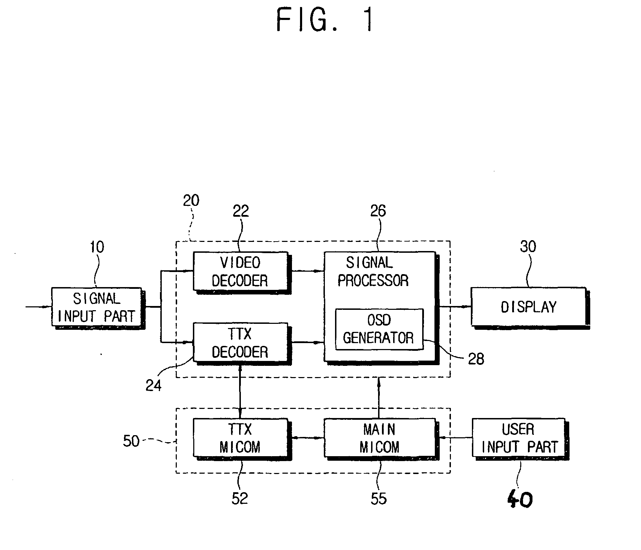

A video processing apparatus according to an embodiment of the present invention is now elucidated in reference to FIG. 1. The video processing apparatus includes a signal input part 10 for receiving a signal which contains at least one of additional information and video information, a processor 20 for processing the signal received through the signal input part 10 to display video including at least one of the additional information and the video information, and a controller 50 for controlling the processor 20.

Herein, the video processing apparatus may be a set-top box or a display device, such as TV, provided with a display 30. Hereinafter, the video processing apparatus includes a TV. The additional information is teletext (TTX) information for representing a variety of information by pages.

A display 30 displays the signal output from the processor 20. The display 30 may include a display panel on which the video corresponding to the signal output from the processor 20 is displayed, and a panel driver for processing the signal fed from the processor 20 and displaying the processed signal on the display panel. It is to be understood that the display panel (not shown) and the panel driver (not shown) are constructed according to the type of the display.

The signal input part 10 serves to receive a signal containing at least one of TTX information and video information. The signal input part 10 may be any input part capable of receiving a signal including the TTX information, for example, an analog signal such as composite video baseband signal (CVBS) and S-video signal, or a component signal. It is preferable that the signal input part 10 is a tuner which tunes to a broadcast channel of the broadcast signal provided from the broadcasting station and receives the broadcast signal.

The processor 20 includes a video decoder 22, a TTX decoder 24, and a signal processor 26. The video decoder 22 processes the video information of the broadcast signal received through the signal input part 10. The TTX decoder 24 extracts and stores the additional information when the additional information is contained in the broadcast signal received through the signal input part 10. The signal processor 26 processes the information fed from at least one of the video decoder 22 and the TTX decoder 24 to be displayable, and outputs the processed signal to the display 30.

The video decoder 22, which is provided as a video information processor, decodes the video information of the broadcast signal received through the signal input part 10, and then outputs the decoded information to the signal processor 26.

The TTX decoder 24, which is provided as an additional information processor, extracts and stores the TTX information from the broadcast signal received through the signal input part 10. The TTX decoder 24 determines whether the TTX information exists in the broadcast signal received through the signal input part 10. Assuming that the broadcast signal is input as the CVBS signal, the determination is made by detecting 6th to 23rd scanning lines or 318th to 335th scanning lines where the TTX information is generally present in the CVBS signal. As for the presence of the TTX information in the broadcast signal, the TTX decoder 24 extracts and stores the TTX information.

The TTX decoder 24 continues to detect, extract, and store the TTX information, as described above. Under the control of the controller 50, the TTX decoder 24 extracts only the caption information from the stored TTX information and outputs the extracted caption information to the signal processor 26, or outputs merely the stored TTX information to the signal processor 26.

Although not illustrated in FIG 1, a demultiplexer (not shown) may be provided to split the broadcast signal, received through the signal input part 10 , to audio information and video information, and service information which is the additional information (TTX signal), and feed the video information to the video decoder 22 and the TTX information to the TTX decoder 24.

The signal processor 26 processes the information fed from at least one of the video decoder 22 and the TTX decoder 24 to be displayable and outputs the processed signal to the display 30. Under the control of the controller 50, the signal processor 26 processes the video corresponding to the video information fed from the video decoder 22 to be displayable on the display 30. Next, the display 30 displays the video of the broadcast signal received through the signal input part 10. The signal processor 26 processes the TTX image corresponding to the TTX information fed from the TTX decoder 24, to be displayable on the display 30. Next, the display 30 displays a TTX page which is the same as a default page of the TTX information in response to the change to the TTX mode by the user's manipulation.

Additionally, the signal processor 26, under the control of the controller 50, processes the video information fed from the video decoder 22 and the caption information fed from the TTX decoder 24 to compose and display the caption image corresponding to the caption information fed from the TTX decoder 24 and the video corresponding to the video information fed from the video decoder 22. In doing so, it is preferred that the signal processor 26 includes an on-screen display (OSD) generator 28 as a UI generator to generate a caption image corresponding to the caption information fed from the TTX decoder 24. In this case, the display 30 can display the OSD caption image, which is extracted from the TTX information, on a certain section of th e video corresponding to the video information fed from the video decoder 22.

The controller 50 determines whether the caption information is in the TTX information stored in the TTX decoder 24, controls the TTX decoder 24, when the caption information is present, to extract and output the caption information from the TT X information, and controls the signal processor 26 to process the video information fed from the video decoder 22 and the caption information fed from the TTX decoder 24 to be displayable.

The controller 50 determines based on the TTX information stored in the TTX decoder 24 whether there is the caption page including the caption information in the TTX information. As for the presence of the caption page, the controller 50 includes a TTX microcomputer (TTX MICOM) 52 as a TT X controller and a main microcomputer (main MICOM) 55 as a main controller. The TTX MICOM 52 controls the TTX decoder 24 to extract and output the caption information corresponding to the caption page from the TTX information. The main MICOM 55 controls the TTX MICOM 52 to check whether there is the caption page including the caption information in the TTX information stored to the TTX decoder 24, and controls the overall operation of the processor 20.

Under the control of the main MICOM 55, the TTX MICOM 52 continuously determines whether there is the caption page including the caption information in the TTX information stored to th e TTX decoder 24. This determination is accomplished by checking whether there is at least one of subtitle information, which is video caption information, and newsflash information, which is news caption information, in the TTX information stored to the TTX decoder 24. Herein, the subtitle information and the newsflash information are recorded to indicate the caption information when the broadcasting station services the caption information in the TTX information. That is, it can be said that the caption page is the page having at least one of the subtitle information and the newsflash information in the TTX information. Upon determining the presence of at least one of the subtitle information and the newsflash information, the TTX MICOM 52 controls the TTX decoder 24 to extract only the caption information from the discovered caption page of the TTX information and output the extracted caption information to the signal processor 25 under the control of the main MICOM 55.

The main MICOM 55 controls the video decoder 22 and the signal processor 26 of the processor 20 to display the video of the broadcast signal received through the signal input part 10 on the display 30. Note that the main MICOM 55 controls the video decoder 22 and the signal processor 26 to display the video of the broadcast signal on the display 30, and at the same time, controls the TTX decoder 24 to continue to extract and store the TTX information of the received broadcast signal.

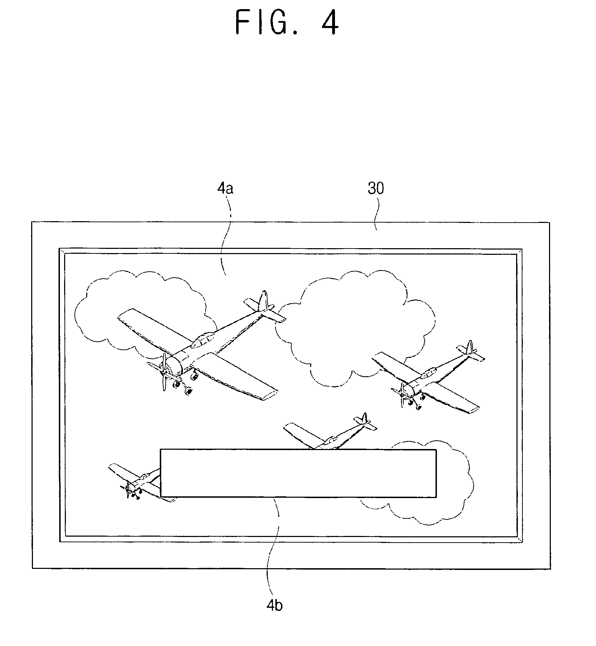

Also, the main MICOM 55 controls the TTX MICOM 52 to continuously determine whether there is the caption page including the caption information in the TTX information stored to the TTX decoder 25. When the caption page including the caption information is in the TTX information according to a result of the determination at the TTX MICOM 52, the main MICOM 55 controls the signal processor 26 to generate the caption image corresponding to the caption information fed from the TTX decoder 24, compose the generated caption image and the video corresponding to the video information fed from the video decoder 22, and display the composed image. Hence, the video 4a and the caption image 4b are displayed together on a screen of the display 30 as shown in FIG. 4. Therefore, the user can automatically watch the captioning similar to the caption page in the TTX mode, without having to manually change to the TTX mnde and search for the caption page.

When the user selects the TTX mode change input to enter the TTX mode, the main MICOM 55 can perform the conventional TTX information display control operation to control the TTX decoder 24 to output the stored TTX information to the signal processor 26 and to control the signal processor 26 and the video decoder 22 to display the default page of the TT X information on the display and enter the TTX mode according to the user's selection. As such, the TV, which is employed as the video processing apparatus according to an embodiment of the present invention, can still perform the TTX function of the related art according to a user's selection.

As described above, the video processing apparatus according to an embodiment of the present invention allows the user to watch the captioning by generating the caption information as the separate UI and automatically displaying the caption image when the caption information is contained in the broadcast signal of the current broadcast channel, without the manual change to the TTX mode by the user for the captioning.

The video processing apparatus generates and displays the caption information as the separate UI over the video, rather entering the TTX mode and displaying the captioning. Accordingly, it is easy to switch to other functions such as channel change, video play, and screen adjustment, while watching the captioning.

Broadcasting stations servicing the TTX information provide different caption pages in page number together with the caption information, whereas the number of the captions page is generally retained for the respective services. For instance, once ABC sets 810th page to the caption page, ABC retains the caption page in general. Accordingly, the user can remember the caption page number of his/her favorite broadcast channel.

In an alternative embodiment of the present invention, the video processing apparatus further includes a user input part 40 to change to another channel of the broadcast signal and to input page information to search for the relevant caption information.

The main MICOM 55 controls the TTX MICOM 52 to store the page information provided through the user input part 40 and to continuously determine whether there is the caption information in the page corresponding to the pre-stored page information of the TTX information stored to the TTX decoder 24. Accordingly, the main MICOM 55 pre-stores the page information relating to the caption page by the user without searching throughout the whole TTX information, and the TTX MICOM 52 can determine the presence or the absence of the caption information merely by searching for the page corresponding to the pre-stored page information of the TTX information.

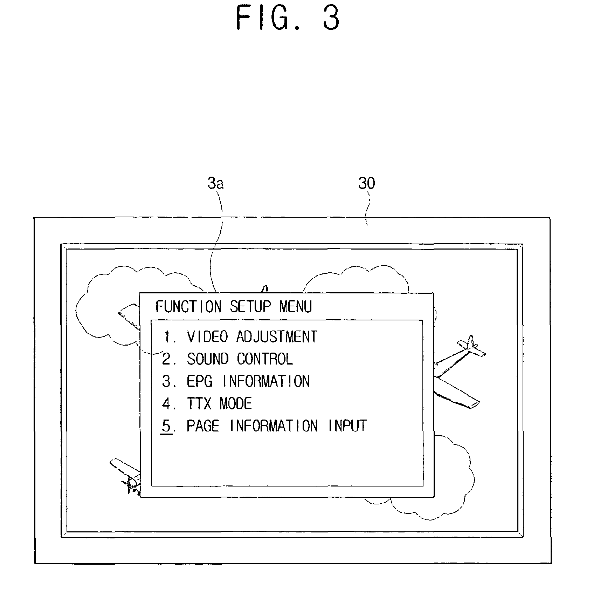

In specific, the main MICOM 55 receives through the user input part 40 and pre-stores the page information of the broadcast signal for the respective broadcast channels. The page information input through the user input part 40 is explained in more detail in reference to FIG. 3.

Referring to FIG. 3, the OSD generator 28 of the signal processor 26 includes menu information to display a function setup menu 3a, and generates a menu signal to display the function setup menu 3a under the control of the main MICOM 55. Hence, the signal processor 26 can display the function setup menu 3a on the display 30 under the control of the main MICOM 55.

The main MICOM 55, upon receiving a function setup function through the user input part 40, controls the signal processor 26 to display the function setup menu 3a. Next, the user selects the item No. 5. Page information input, enters a sub-menu (not shown), and inputs the page information for the respective broadcast channels by manipulating the user input part 40.

The main MICOM 55 stores the page information for the respective broadcast channels input through the user input part 40. In case that the user changes the broadcast channel by means of the user input part 40, the main MICOM 55 controls the signal input part 10 to tune to the changed broadcast channel. Next, the main MICOM 55 acquires the page information corresponding to the changed broadcast channel and controls the TTX MICOM 52 to continuously check whether there is caption information in the page corresponding to the acquired page information in the TTX information which is extracted from the broadcast signal received over the changed broadcast channel and stored to the TTX decoder 24.

For example, while displaying the video of the SSB broadcast channel, the TTX MICOM 52 continuously determines whether there is the caption information in 809th page of the pre-stored page information corresponding to the CNN broadcast channel, in th e TT X information stored corresponding to the CNN broadcast channel to the TTX decoder 24. When the channel is changed to the ABC broadcast channel, the TTX MICOM 52 continuously determines whether there is the caption information in 810th page of the pre-stored page information corresponding to the ABC broadcast channel, in th e TT X information stored corresponding to the ABC broadcast channel to the TTX decoder 24.

As for the caption information present in the page corresponding to the page information of the current broadcast channel in the TTX information according to a result of the determination at the TTX MICOM 52, the main MICOM 55 controls the signal processor 26 to generate the caption image corresponding to the caption information fed from the TTX decoder 24, compose and display the generated caption image and the video corresponding to the video information fed from the video decoder 22. Consequently, as shown in FIG. 4, the video 4a and the caption image 4b are displayed together on the screen of the display 30.

Upon determining the absence of the corresponding page information in the broadcast channel changed using the user input part 40, the main MICOM 55 controls the TTX MICOM 52 to continuously check whether there is the caption page including the caption information in the TTX information which is extracted from the broadcast signal received in the changed broadcast channel and stored to the TTX decoder 24.

According to a result of the determination at the TTX MICOM 52, when there is no caption information in the page corresponding to the page information of the current broadcast channel, the main MICOM 55 controls the TTX MICOM 52 to continuously determine whether there is the caption page including the caption information in the TTX information which is extracted from the broadcast signal received in the changed broadcast channel and stored in the TTX decoder 24.

As for the presence of the caption page including the page information in the TTX information according to a result of the determination at the TTX MICOM 52, the main MICOM 55 controls the signal processor 26 to generate the caption image corresponding to the caption information fed from the TTX decoder 24, compose and display the generated caption image and the video corresponding to the video information fed from the video decoder 22.

As mentioned above, even when the user does not manually enter the TTX mode to watch the captioning, the example video processing apparatus allows the user to watch the captioning by automatically generating and displaying the caption image when the caption information is contained in the broadcast signal of the current broadcast channel. In addition, the video processing apparatus can determine the presence or the absence of the caption information by retrieving the pages pre-stored by the usher according to priority, without retrieving the entire TTX information.

Consequently, the user of the video processing apparatus can easily enjoy the captioning without the manipulation s even wh e n he/she does no t know the availability of the captioning. Furthermore, the video processing apparatus facilitates the change to other functions, such as channel change, video play, and screen adjustment, while watching the captioning by generating the caption information has the separate UI and displaying the composition of the caption information and the video, rather than servicing the captioning by entering the TTX mode.

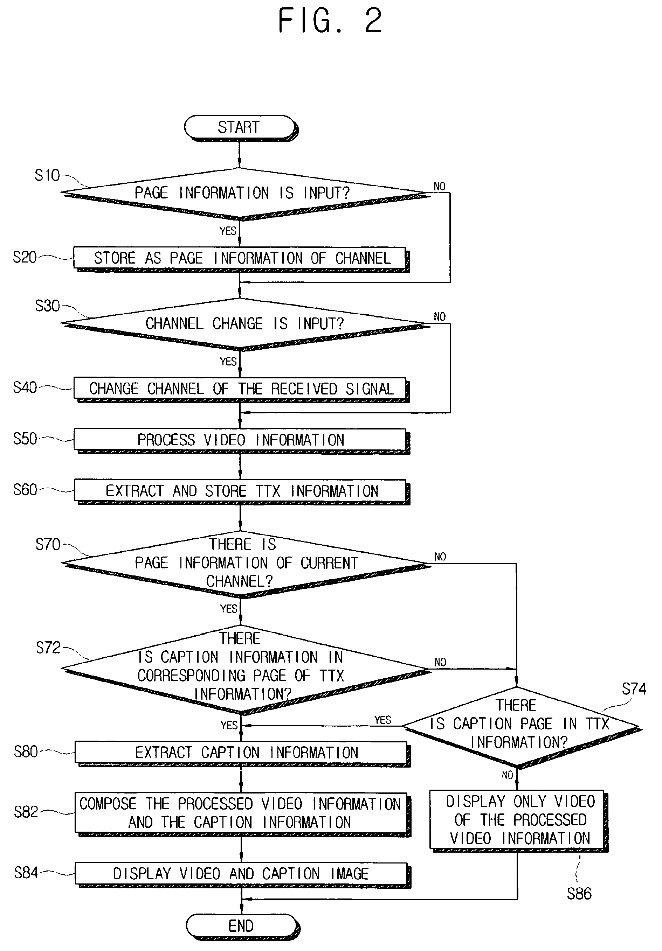

Hereafter, a control method of the video processing apparatus is explained in detail in reference to FIG. 2.

The main MICOM 55 determines whether the page information is input through the user input part 40 (S10). When the page information is input, the man MICOM 55 stores the incoming pa g e information a s th e corresponding information of the broadcast channel (S20). As such, the main MICOM 55 pre-stores the page information of the respective broadcast channels.

The main MICOM 55 determines whether the broadcast channel is changed through the user input part 40 (S30). When the broadcast channel is changed, the main MICOM 55 controls the signal input part 10 to tune to the changed broadcast channel (S40). The main MICOM 55 controls the video decoder 22 to process the video information of the broadcast signal, received through the signal input part 10, of the current broadcast channel (S50). At this time, the main MICOM 55 controls the video decoder 22 and the signal processor 26 to display the video of the broadcast signal on the display 30, and at the same time, controls the TTX decoder 24 to continuously extract and store the TTX information from the received broadcast signal (S60) . When the broadcast channel is changed, the TTX decoder 24 continuously stores the TTX information of the broadcast signal which is received in the changed broadcast channel. In brief, the TTX decoder 24 continuously stores the TTX information of the current broadcast channel.

The main MICOM 55 determines whether there is the pre-stored page information corresponding to th e changed broadcast channel, that is, corresponding to the current broadcast channel (S70). When there is the pre-stored page information corresponding to the current broadcast channel, the main MICOM 55 determines whether or no t the corresponding page contains the caption information by controlling the TTX MICOM 52 to continuously determine there is the caption information in the page corresponding to the acquired page information, in the TTX information stored to the TTX decoder 24 (S72). When the TTX information contains the caption information in the page corresponding to the page information of the current broadcast channel, the TTX MICOM 52 controls the TTX decoder 24 to extract only the caption information from the TTX information and output the extracted caption information to the signal processor 26 (S80). The main MICOM 55 controls the OSD generator 28 of the signal processor 26 to generate the caption image corresponding to the caption information fed from the TTX decoder 24, and controls the signal processor 26 to compose the generated caption image and the video of the video information fed from the video decoder 22 (S82). The display 30 displays the video 40 and the caption image 4b together on the screen (S84), as shown in FIG. 4.

Upon determining there is no pre-stored page information corresponding to the current broadcast channel at operation S70, the main MICOM 55 controls the TTX MICOM 52 to continuously determine whether there is the caption page including the caption information in th e TTX information stored to the TTX decoder 24 (S74). When there is the caption page including the caption information in the TTX information, the TTX MICOM 52 controls the TTX decoder 24 to extract only the caption information from the T T X information and output the extracted caption information to the signal processor 26 (S8)). Next, the main MICOM 55 performs the operations S82 and S84 as explained above. By contrast, when determining no caption page including the caption information in the TTX information at operation S74, the main MICOM 86 controls the video decoder 22 and the signal processor 26 to display the video, which has been processed at the video decoder 22, of the video information of the current broadcast channel on the display 30 (S86).

Upon determining no caption information in the page of the page information which is pre-stored corresponding to the current broadcast channel at operation S72, the main MICOM 55 controls the TTX MICOM 52 to continuously determine whether there is the caption page including the caption information in the TTX information stored to the TTX decoder 24 (S74). The main MICOM 55 carries out the subsequent operations of the operation S74.

As set forth above, when the caption information is contained in the broadcast signal of the current broadcast signal, the video processing apparatus and control method thereof can provide the captioning to the user by generating the caption information as the separate UI and automatically displaying the caption image. At this time, the user does not need to manually change to the TTX mode to watch the captioning. The video processing apparatus and control method thereof determines the presence or the absence of the caption information by retrieving the pages, which are pre-stored by the user, according to the priority, rather than retrieving the entire TTX information.

Furthermore, the user can enjoy the captioning easily and efficiently without the cumbersome manipulation even when he/she is not aware of the availability of the captioning. The video processing apparatus and control method thereof facilitates switching to other functions such as channel change, video play, and screen adjustment while watching the captioning by generating the caption information as the separate UI and displaying the composition of the caption information and the video, rather than servicing the captioning in the TTX mode.

In light of the foregoing, since the caption information is generated as the separate UI and the generated caption image is automatically displayed without entering the TTX mode, the user can conveniently enjoy the captioning. Also, it is possible to rapidly change to other functions while watching the captioning.

Although a few preferred embodiments have been shown and described, it will be appreciated by those skilled in the art that various changes and modifications might be made without departing from the scope of the invention, as defined in the appended claims.

## Claims

1. A video processing apparatus for receiving a signal which contains additional information and video information, the apparatus comprising:
a video information processor (22) operable to process video information in the received signal;
an additional information processor (24) operable to extract and store additional information of the received signal;
a signal processor (26) operable to process information output from at least one of the video information processor (22) and the additional information processor (24) to be displayable; and
a controller (50) operable to determine whether there is caption information in the additional information stored to the additional information processor (24), control the additional information processor (24) to extract the caption information from the stored additional information and output the extracted caption information when there is the caption information, and to control the signal processor (26) to process the video information output from the video information processor (22) acid the caption information output from the additional information processor (24) to be displayable, wherein the additional information is teletext (TTX) information representing a variety of information by pages; wherein the additional information processor (24) extracts and stores the TTX information, and comprises a TTX decoder which extracts the caption information from the TTX information and outputs the extracted caption information to the signal processor under (26) control of the controller (50); wherein the controller (50) comprises:
a TTX controller (52) operable to determine based on the TTX information stored to the TTX decoder whether there is caption information in a certain page of the TTX information, and control the TTX decoder to extract and output the caption information from the TTX information when there is such caption information; and
a main controller (55) operable to control the TTX controller (52) to check whether there is the caption information in the certain page, and control the signal processor (26) to process the video information output from the video information processor (22) and the caption information output from the TTX decoder to be displayable; the video processing apparatus further comprising:
a user input part (40) operable to change a channel of the received signal and to input page information to check whether there is the caption information,
wherein the main controller (55) controls the TTX controller (52) to pre-store the page information input through the user input part (40) and to check whether there is caption information in a page corresponding to the pre-stored page information in the TTX information stored by the TTX decoder when the channel is changed through the user input part (40).

2. The video processing apparatus according to claim 1, wherein the main controller (55), when there is no page information pre-stored corresponding to the current channel which is changed through the user input part (40), controls the TTX controller (52) to check whether there is a caption page comprising the caption information in th e TTX information stored by the TTX decoder.

3. The video processing apparatus according to claim 2, wherein the main controller (55), when there is no caption information in the page corresponding to the pre-stored page information according to a result of the checking at the TTX controller (52), controls the TTX controller (52) to check whether there is a caption page comprising caption information in the TTX information stored by the TTX decoder.

4. The video processing apparatus according to any one of claims 1-3, wherein the TTX controller (52) determines whether there is the caption information, based on the TTX information stored to the TTX decoder by checking whether there is at least one of subtitle information and newsflash information in the TTX information.

5. The video processing apparatus according to claim 4, wherein the signal processor (26) processes the video information and the caption information to compose a caption corresponding to the caption information output from the TTX decoder and a video corresponding to the video information output from the video information processor (22) and display the composition.

6. The video processing apparatus according to claim 4 or 5, wherein the signal processor (26) comprises:
a user interface (UI) generator (28) which generates a caption image corresponding to the caption information output from the TTX decoder.

7. The video processing apparatus according to any preceding claim, further comprising:
a display (30) which displays the video signal output from the signal processor (26).

8. A control method of a video processing apparatus which receives a signal containing additional information and video information, the control method comprising:
processing the video information of the received signal (S50);
extracting and storing the additional information of the received signal (S60);
extracting caption information from the stored additional information when there is caption information in the additional information (S80); and
processing the processed video information and the extracted caption information to be displayable (S82), wherein the additional information is teletext (TTX) information to represent a variety of information by pages;
wherein the extracting and storing of the additional information of the received signal (S60) comprises:
determining there is the TTX information in the received signal (S72); and
extracting and storing the TTX information when there is the TTX information;
wherein the extracting of the caption information from the stored additional information (S80) comprises:
determining based on the stored TTX information whether there is the caption information in a certain page of the TTX information(S72); and
extracting the caption information from the stored TTX information when there is the caption information;
the extracting caption information still further comprising:
determining whether page information is input to check whether there is the caption information (S10); and
storing the input page information when the page information is input (S20);
wherein the extracting of the caption information from the stored additional information comprises:
determining whether there is the caption information in a page corresponding to the pre-stored page information in the stored TTX information when a channel of the received signal is changed (S30); and
extracting the caption information from the stored TTX information when there is the caption information..

9. The control method according to claim 8, further comprising:
receiving and storing page information for channels of the received signal,
wherein the determining of whether there is the caption information comprises:
determining whether there is the caption information in a page corresponding to the pre-stored page information corresponding to a current channel in the stored TTX information when the channel of the received signal is changed.

10. The control method according to claim 9, wherein the extracting of the caption information from the stored additional information comprises:
checking whether there is a caption page which comprises the caption information in the stored TTX information when the page information corresponding to the changed current channel is not pre-stored.

11. The control method according to claim 9 or 10, wherein the extracting of the caption information from the stored additional information comprises:
checking whether there is a caption page comprising the caption information in the stored TTX information when there is no caption information in the page corresponding to the pre-stored page information.

12. The control method according to claim 10 or 11, wherein the extracting of the caption information from the stored additional information (S80) determines whether there is the caption information based on the stored TTX information by checking whether there is at least one of subtitle information and newsflash information in the TTX information.

13. The control method according to claim 12, wherein the processing of the processed video information and the extracted caption information to be displayable (S82) comprises:
generating a caption image corresponding to the caption information to compose a caption corresponding to the output caption information and a video corresponding to the processed video information and to display the composition (S84).

## Patentansprüche

1. Video-Verarbeitungsgerät zum Empfang eines Signals, das zusätzliche Informationen und Video-Informationen enthält, wobei das Gerät das Folgende umfasst:
- Video-Informationsprozessor (22), der die Video-Informationen im empfangenen Signal verarbeitet;
- Zusatz-Informationsprozessor (24), der die im empfangenen Signal enthaltenen zusätzlichen Informationen abfragt und speichert;
- Signalprozessor (26), welcher die Ausgabeinformationen von zumindest einem der beiden Prozessoren, also dem Video-Informationsprozessor (22) und dem Zusatz-Informationsprozessor (24) verarbeitet, sodass dieses anzeigbar werden; und
- Kontroller (50), der feststellt, ob Untertitel in den vom Zusatz-Informationsprozessor (24) gespeicherten zusätzlichen Informationen vorhanden sind, der den Zusatz-Informationsprozessor (24) steuert, um die in den zusätzlichen Informationen enthaltene Untertitelinformation abzufragen und letztere, falls vorhanden, ausgibt und die Ausgabe von Videoinformationen des Signalprozessors (26) zur Verarbeitung der Videoausgangsinformation des Video-Informationsprozessors (22) und die Untertitel-Informationsausgabe des Zusatz-Informationsprozessors (24) steuert, sodass diese anzeigbar wird, und wobei die Zusatzinformationen Teletextinformationen (TTX) sind, die aus einer Vielzahl von nach Seiten organisierten Informationen bestehen;
- Dergestalt, dass der Zusatz-Informationsprozessor (24) die TTX-Informationen abfragt und speichert und einen TTX-Dekodierer enthält, welcher die Untertitelinformation aus den TTX-Informationen abfragt und die abgefragte Untertitelinformation an den vom Kontroller (50) gesteuerten Signalprozessor (26) ausgibt;
- Wobei der Kontroller (50) Folgendes umfasst:
einen TTX-Kontroller (52), welcher anhand der im TTX-Dekodierer gespeicherten Informationen feststellt, ob auf einer bestimmten Seite der TTX-Informationen Untertitelinformation vorhanden ist und die Abfrage und Ausgabe der eventuell in den TTX-Informationen enthaltenen Untertitelinformationen durch den Dekodierer steuert; und einen Hauptkontroller (55), der den TTX-Kontroller (52) steuert, um zu überprüfen, ob auf der jeweiligen Seite Untertitelinformation vorhanden ist und den Signalprozessor (26) steuert, um die Ausgabe von Videoinformationen durch den Video-Informationsprozessor (22) und die Ausgabe von Untertitelinformation durch den TTX-Dekodierer zu steuern, damit diese anzeigbar wird, wobei das Videoverarbeitungsgerät ferner folgende Komponenten umfasst:
eine Benutzereingabe (40) zur Änderung des Kanals des empfangenen Signals und zur Eingabe von Seiteninformationen, um zu überprüfen, ob Untertitelinformation vorhanden ist, wobei der Hauptkontroller (55) den TTX-Kontroller (52) steuert, um die mittels der Benutzereingabevorrichtung (40) eingegebene Seiteninformation vorzuspeichern und zu prüfen, ob auf einer Seite Untertitelinformation vorhanden ist, die der bei einer Kanalumschaltung anhand der Benutzereingabevorrichtung (40) vorgespeicherten Seiteninformation in der vom TTX-Dekodierer gespeicherten TTX-Information entspricht.

2. Video-Verarbeitungsgerät nach Anspruch 1, in welchem der Hauptkontroller (55), falls keine dem durch die Benutzereingabevorrichtung (40) umgeschalteten Kanal entsprechenden vorgespeicherten Seiteninformationen vorhanden sind, den TTX-Kontroller (52) steuert, um zu überprüfen, ob in den vom TTX-Dekodierer gespeicherten TTX-Informationen eine Untertitelseite mit der Untertitelinformation vorhanden ist.

3. Video-Verarbeitungsgerät nach Anspruch 2, in welchem der Hauptkontroller (55), wenn entsprechend dem Prüfergebnis des TTX-Kontrollers (52) auf der den vorgespeicherten Seiteninformationen entsprechenden Seite keine Untertitelinformation vorhanden ist, den TTX-Kontroller (52) steuert, um zu überprüfen, ob in den vom TTX-Dekodierer gespeicherten TTX-Informationen eine Untertitelseite mit Untertitelinformation vorhanden ist.

4. Video-Verarbeitungsgerät nach jedem beliebigen der Ansprüche 1-3, in welchem der TTX-Kontroller (52) durch Prüfung der im TTX-Dekodierer gespeicherten TTX-Informationen feststellt, ob in den TTX-Informationen mindestens eine der beiden Arten von Informationen, also Untertitelinformation oder Kurzmitteilungsinformation, vorhanden ist.

5. Video-Verarbeitungsgerät nach Anspruch 4, in welchem der Signalprozessor (26) die Video- und die Untertitelinformationen verarbeitet, um einen Untertitel entsprechend der Ausgabe von Untertitelinformationen des TTX-Decoders und ein Video entsprechend der Ausgabe von Videoinformationen des Video-Informationsprozessors (22) zusammenzustellen und dieses Mischsignal zur Anzeige zu bringen.

6. Video-Verarbeitungsgerät nach Anspruch 4 oder 5, wobei der Signalprozessor (26) Folgendes umfasst:
- Einen Benutzerschnittstellen (UI)-Generator (28), der das Untertitelschriftbild entsprechend den vom TTX-Dekodierer zur Verfügung gestellten Untertitelinformationen erzeugt.

7. Video-Verarbeitungsgerät entsprechend vorangehender Ansprüche, das außerdem Folgendes umfasst:
- Eine Anzeige (30), welche die Videosignalausgabe des Signalprozessors (26) anzeigt.

8. Ein Steuerverfahren für ein Video-Verarbeitungsgerät, das ein Signal empfängt, welches zusätzliche Informationen und Videoinformationen enthält, wobei das Steuerverfahren Folgendes umfasst:
- Verarbeitung der Videoinformationen des empfangenen Signals (S50),
- Abfragen und Speichern der Zusatzinformationen des empfangenen Signals (S60),
- Abfragen der Untertitelinformationen aus den gespeicherten Zusatzinformationen, wenn letztere in den Zusatzinformationen (S80) enthalten sind und
- Aufbereitung der verarbeiteten Videoinformationen und der abgefragten Untertitelinformationen, sodass diese anzeigefähig werden (S82), wobei die zusätzliche Information eine Teletext -Information (TTX) ist, die unterschiedliche nach Seiten organisierte Informationen enthält;
Wobei Abfragen und Speichern der Zusatzinformationen des empfangenen Signals (S60) Folgendes umfasst:
Feststellen, ob das empfangene Signal (S72) die TTX-Information enthält; und
Falls letzteres der Fall ist, Abfragen und Abspeichern der TTX-Informationen;
- Wobei die Abfrage von Untertitelinformation aus den gespeicherten Zusatzinformationen (S80) Folgendes beinhaltet:
- anhand der gespeicherten TTX-Informationen feststellen, ob sich auf einer bestimmten Seite der TTX-Informationen (S72) Untertitelinformation befindet; und
- wenn Untertitelinformation vorliegt, diese Untertitelinformation aus der gespeicherten TTX-Information abfragen;
- Wobei das Abfragen von Untertitelinformation ferner Folgendes beinhaltet:
Feststellen, ob Seiteninformation eingegeben wird, um zu prüfen, ob Untertitelinformation (S10) vorhanden ist; und
- Speichern der eingegangenen Seiteninformation bei Eingabe der Seiteninformation (S20);
- Wobei Abfrage von Untertitelinformation aus den gespeicherten Zusatzinformationen (S80) Folgendes umfasst:
- feststellen, ob bei Umschaltung des Empfangskanals (S30) auf einer der vorgespeicherten Seiteninformation entsprechenden Seite in der abgespeicherten TTX-Information Untertitelinformation vorliegt; und
- falls Untertitelinformation vorhanden ist, die Abfrage der Untertitelinformation aus der gespeicherten TTX-Information.

9. Steuerverfahren nach Anspruch 8, ferner beinhaltend:
- Empfang und Speicherung von Seiteninformationen für die Kanäle des empfangenen Signals,
- Wobei die Feststellung, wo sich die Untertitelinformation befindet, Folgendes beinhaltet:
- Ermittlung der Untertitelinformation auf einer der vorgespeicherten Seiteninformation entsprechenden Seite, die bei Empfangskanalumschaltung dem aktuellen in den TTX-Informationen gespeicherten Kanal entspricht.

10. Steuerverfahren nach Anspruch 9, wobei die Abfrage von Untertitelinformation aus den gespeicherten Zusatzinformationen Folgendes beinhaltet:
- Überprüfung, ob es eine Untertitelseite mit Untertitelinformationen in den gespeicherten TTX- Informationen gibt, wenn die dem derzeitigen umgeschalteten Kanal entsprechende Seiteninformation nicht vorgespeichert wird.

11. Steuerverfahren nach Anspruch 9 oder 10, wobei die Abfrage von Untertitelinformation aus den gespeicherten Zusatzinformationen Folgendes umfasst:
- Überprüfung, ob es eine Untertitelseite mit Untertitelinformationen in den gespeicherten TTX-Informationen gibt, wenn auf der den vorgespeicherten Seiteninformationen entsprechenden Seite keine Untertitelinformation vorhanden ist.

12. Steuerverfahren nach Anspruch 10 oder 11, wobei die Abfrage der Untertitelinformation aus den gespeicherten Zusatzinformationen (S80) durch Prüfung des Vorhandenseins mindestens einer der beiden Informationsarten, also Untertitelinformation oder Kurzmeldungsinformation, in den TTX Informationen ermittelt, ob auf den TTX-Informationen basierende Untertitelinformationen vorhanden sind.

13. Steuerverfahren nach Anspruch 12, wobei die Aufbereitung der verarbeiteten Videoinformation und der abgefragten Untertitelinformation, sodass diese anzeigbar werden, (S82) Folgendes beinhaltet:
- Erzeugen eines den Untertitelinformationen entsprechenden Untertitelbildes zur Zusammenstellung eines den ausgegebenen Untertitelinformationen entsprechenden Untertitels und eines den verarbeiteten Videoinformationen entsprechenden Videobildes und Anzeige dieser Zusammenstellung (S84).

## Revendications

1. Un appareil de traitement vidéo pour recevoir un signal contenant des informations supplémentaires et des informations vidéo, l'appareil comprenant :
un processeur d'informations vidéo (22) servant à traiter les informations vidéo du signal reçu ;
un processeur d'informations supplémentaires (24) servant à extraire et stocker les informations supplémentaires du signal reçu ;
un processeur de signal (26) servant à traiter les informations issues d'au moins un des deux processeurs que sont le processeur d'informations vidéo (22) et le processeur d'informations supplémentaires (24) de manière à pouvoir les afficher ; **et**
un contrôleur (50) servant à déterminer s'il y a
des informations de légende parmi les informations supplémentaires stockées sur le processeur d'informations supplémentaires (24), à commander le processeur d'informations supplémentaires (24) pour extraire les informations de légende des informations supplémentaires stockées et à sortir les informations de légende extraites lorsqu'il y a des informations de légende; ainsi qu'à commander le processeur de signal (26) pour qu'il traite les informations vidéo issues du processeur d'informations vidéo (22) et les informations de légende issues du processeurs d'informations supplémentaires **(24)** de manière à pouvoir les afficher, où les informations supplémentaires sont des informations télétexte (TTX) représentant une variété d'informations par pages ; où le processeur d'informations supplémentaires (24) extrait et stocke les informations TTX, et comprend un décodeur TTX qui extrait les informations de légende des informations TTX et envoie les informations de légende extraites vers le processeur de signal commandé (26) par le contrôleur (50) ; où le contrôleur (50) comprend :
un contrôleur TTX (52) servant à déterminer à partir des informations TTX stockées sur le décodeur TTX s'il y a des informations de légende dans une page précise comprenant des informations TTX et à commander le décodeur TTX pour qu'il extraie et génère les informations de légende à partir des informations TTX lorsque ces informations de légende existent ; et
un contrôleur principal (55) servant à commander le contrôleur TTX (52) pour vérifier s'il y a des informations de légende dans une page précise et à commander le processeur de signal (26) pour qu'il traite les informations vidéo générées par le processeur d'informations vidéo (22) et les informations de légende générées par le décodeur TTX de manière à pouvoir les afficher; le dispositif de traitement vidéo comprenant également :
un élément de saisie utilisateur (40) servant à changer un canal du signal reçu et à saisir des informations de page pour vérifier s'il y a des informations de légende,
où le contrôleur principal 1 (55) commande le contrôleur TTX (52) pour pré-stocker les informations de page saisies via l'élément de saisie utilisateur (40) et pour vérifier s'il y a des informations de légende dans une page correspondante aux informations de page pré-stockées parmi les informations TTX stockées par le décodeur TTX lorsque le canal est modifié via l'élément de saisie utilisateur (40) .

2. L'appareil de traitement vidéo selon la revendication 1, où le contrôleur principal (55), lorsqu'il n'y a aucune information de page pré-stockée correspondant au canal actuel modifié via l'élément de saisie utilisateur (40), commande le contrôleur TTX (52) pour vérifier s'il y a une page de légende comprenant des informations de légende parmi les informations TTX stockées par le décodeur TTX.

3. L'appareil de traitement vidéo selon la revendication 2,
où le contrôleur principal (55), lorsqu'il n'y a aucune information de légende dans la page correspondant aux informations de page pré-stockées suite à la vérification au niveau du contrôleur TTX (52), commande le contrôleur TTX (52) pour qu'il vérifie s'il y a une page de légende comprenant des informations de légende parmi les informations TTX stockées par le décodeur TTX.

4. L'appareil de traitement vidéo selon l'une des revendications 1 à 3, où le contrôleur TTX (52) détermine s'il y a des informations de légende parmi les informations TTX stockées sur le décodeur TTX en vérifiant s'il y a au moins une information de sous-titre et information de flash info parmi les informations TTX.

5. L'appareil de traitement vidéo selon la revendication 4, où le processeur de signal 1 (26) traite les informations vidéo et les informations de légende, permettant de composer une légende, correspondant aux informations de légende issues du décodeur TTX et une vidéo correspondant aux informations vidéo issues du processeur d'informations vidéo (22), et affiche la composition.

6. L'appareil de traitement vidéo selon la revendication 4 ou 5, où le processeur de signal (26) comprend :
un générateur d'interface utilisateur (UI) (28) qui génère une image de légende correspondant aux informations de légende issues du décodeur TTX.

7. L'appareil de traitement vidéo, selon une revendication précédente, comprend également :
un écran (30) qui affiche le signal vidéo issu du processeur de signal (26).

8. Une méthode de contrôle d'un appareil de traitement vidéo qui reçoit un signal contenant des informations supplémentaires et des informations vidéo, la méthode de contrôle comprenant :
le traitement des informations vidéo du signalreçu (S50) ;
l'extraction et le stockage des informations supplémentaires du signal reçu (S60) ;
l'extraction des informations de légende issues des informations supplémentaires stockées, s'il y a des informations de légende parmi les informations supplémentaires (S80) ; et
le traitement des informations vidéo traitées et des informations de légende extraite de manière à pouvoir les afficher (S82), où les informations supplémentaires sont des informations télétexte (TTX) permettant de représenter différents types d'informations par pages ;
où l'extraction et le stockage des informations supplémentaires du signal reçu (S60) comprend :
la détermination de la présence d'informations TTX dans le signal reçu (S72) ;
l'extraction et le stockage des informations TTX s'il y en a ;
où l'extraction des informations de légende issues des informations supplémentaires stockées (S80) comprend :
la détermination à partir des informations TTX stockées de la présence d'informations de légende dans une page précise des informations TTX (S72) ; et
l'extraction des informations de légende issues des informations TTX stockées lorsqu'il y a des informations de légende ;
l'extraction des informations de légende comprenant également :
la détermination de la saisie ou non d'informations de page pour vérifier s'il y a des informations de légende (S10) ;
le stockage des informations de page saisies lorsque les informations de page sont saisies (S20) ;
où l'extraction des informations de légende issues des informations supplémentaires stockées comprend :
la détermination de la présence d'informations de légende dans une page correspondant aux informations de page pré-stockées parmi les informations TTX stockées lorsqu' un canal du signal reçu est modifié (S30) ; et
l'extraction des informations de légende issues des informations TTX stockées s'il y a des informations de légende.

9. La méthode de contrôle selon la revendication 8 comprend également :
la réception et le stockage des informations de page pour les canaux du signal reçu,
où la détermination de la présence d'informations de légende comprend :
la détermination de la présence d'informations de légende dans une page correspondant aux informations de page pré-stockées correspondant à un canal actuel parmi les informations TTX stockées si le canal du signal reçu est modifié.

10. La méthode de contrôle selon la revendication 9, où l'extraction des informations de légende des informations supplémentaires stockées comprend :
la vérification de la présence d'une page de légende comprenant des informations de légende parmi les informations TTX stockées lorsque les informations de page correspondant au canal actuel modifié ne sont pas pré-stockées.

11. La méthode de contrôle selon la revendication 9 ou 10, où l'extraction des informations de légende des informations supplémentaires stockées comprend :
la vérification de la présence d'une page de légende comprenant des informations de légende parmi les informations TTX stockées lorsqu'il n'y a aucune information de légende dans la page correspondant aux informations de page pré-stockées.

12. La méthode de contrôle selon la revendication 10 ou 11, où l'extraction des informations de légende des informations supplémentaires stockées (S80) détermine s'il y a des informations de légende parmi les informations TTX stockées en vérifiant s'il y a au moins une information de sous-titre et information de flash info parmi les informations TTX.

13. La méthode de contrôle selon la revendication 12, où le traitement des informations vidéo traitées et des informations de légende extraites de manière à pouvoir les afficher (S82) comprend :
la génération d'une image de légende correspondant aux informations de légende servant à composer une légende correspondant aux informations de légende produites et à une vidéo correspondant aux informations vidéo traitées et à afficher la composition (S84).
